(19) Europäisches Patentamt
European Patent Office
Office européen des brevets

(11) **EP 3 993 301 A1**

(12) **EUROPEAN PATENT APPLICATION**
published in accordance with Art. 153(4) EPC

(43) Date of publication:
04.05.2022 Bulletin 2022/18

(51) International Patent Classification (IPC):
***H04L 5/00*** (2006.01)

(21) Application number: 20849442.7

(52) Cooperative Patent Classification (CPC):
**H04L 5/00; H04W 72/04; H04W 72/08; H04W 74/00; H04W 74/08**

(22) Date of filing: 01.07.2020

(86) International application number:
**PCT/CN2020/099763**

(87) International publication number:
**WO 2021/022952 (11.02.2021 Gazette 2021/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 06.08.2019 CN 201910721719

(71) Applicant: Huawei Technologies Co., Ltd.
**Longgang District**
**Shenzhen, Guangdong 518129 (CN)**

(72) Inventors:
• CHEN, Lei
Shenzhen, Guangdong 518129 (CN)
• YU, Yingjie
Shenzhen, Guangdong 518129 (CN)
• WANG, Yi
Shenzhen, Guangdong 518129 (CN)

(74) Representative: **Maiwald Patent- und Rechtsanwaltsgesellschaft mbH**
**Elisenhof**
**Elisenstraße 3**
**80335 München (DE)**

(54) **METHOD AND DEVICE FOR SIGNAL TRANSMISSION**

(57) This application provides a signal transmission method and an apparatus. The method includes: receiving RACH configuration information of a neighboring cell from a location management device or a serving cell, where the RACH configuration information includes information about an RACH resource and a preamble; sending the preamble to the neighboring cell by using the RACH resource; and receiving an uplink TA of the neighboring cell that is determined by the neighboring cell based on the preamble. A terminal device obtains the uplink TA of the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

FIG. 5

**Description**

This application claims priority to Chinese Patent Application No. 201910721719.7, filed with the China National Intellectual Property Administration on August 6, 2019 and entitled "SIGNAL TRANSMISSION METHOD AND APPARATUS", which is incorporated herein by reference in its entirety.

**TECHNICAL FIELD**

This application relates to the communications field, and in particular, to a signal transmission method and an apparatus.

**BACKGROUND**

In some cases, a neighboring base station needs to receive, for measurement, an uplink signal sent by a terminal device. For example, in an uplink time difference of arrival (uplink time difference of arrival, UTDOA) locating method, the terminal device sends a sounding reference signal (sounding reference signal, SRS), a plurality of base stations including the neighboring base station receive the SRS sent by the terminal device and measure receiving time information of the SRS, and a location management device calculates an uplink time difference of arrival based on the receiving time information of the SRS received by the plurality of base stations, and may locate the terminal device with reference to geographical locations of the plurality of base stations.

When sending an SRS to a serving cell, the terminal device may adjust a sending occasion of the SRS based on a timing advance (timing advance, TA) between the terminal device and the serving cell. However, when sending the SRS to a neighboring cell, the terminal device cannot learn of a TA between the terminal device and the neighboring cell, and therefore cannot adjust an occasion for sending the SRS. Consequently, the SRS sent by the terminal device may cause interference to another signal of the neighboring cell.

How to obtain the TA between the terminal device and the neighboring cell is a problem that needs to be urgently resolved.

**SUMMARY**

This application provides a signal transmission method and an apparatus, so that a terminal device may obtain an uplink TA between the terminal device and a neighboring cell, thereby avoiding, to some extent, interference caused by an SRS sent by the terminal device to the neighboring cell to another signal of the neighboring cell.

This application further provides a signal transmission method and an apparatus, so that directional sending of an SRS may be implemented, and flexibility of selecting a sending direction of the SRS by a terminal device may be further implemented.

According to a first aspect, a signal transmission method is provided. The method includes: receiving random access channel (random access channel, RACH) configuration information of a neighboring cell from a location management device or a serving cell, where the RACH configuration information includes information about an RACH resource and a preamble; sending the preamble to the neighboring cell by using the RACH resource; and receiving an uplink TA of the neighboring cell that is determined by the neighboring cell based on the preamble. The uplink TA of the neighboring cell represents an uplink TA between a terminal device and the neighboring cell.

In this application, the terminal device obtains the uplink TA between the terminal device and the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

The neighboring cell mentioned in this application represents a network device in the neighboring cell, and the network device may be referred to as a neighboring base station. For example, the neighboring cell in this application represents a network device configured to perform uplink locating for the terminal device, or a network device that receives an uplink reference signal of the terminal device.

With reference to the first aspect, in a possible implementation of the first aspect, the receiving an uplink TA of the neighboring cell that is determined by the neighboring cell based on the preamble includes: receiving the uplink TA of the neighboring cell from the location management device.

With reference to the first aspect, in a possible implementation of the first aspect, the receiving an uplink TA of the neighboring cell that is determined by the neighboring cell based on the preamble includes: receiving a random access response message from the neighboring cell, where the random access response message carries the uplink TA of the neighboring cell.

With reference to the first aspect, in a possible implementation of the first aspect, the method further includes:

sending a sounding reference signal SRS to the neighboring cell based on the uplink TA of the neighboring cell.

According to a second aspect, a signal transmission method is provided. The method includes: receiving RACH configuration information from a neighboring cell, where the RACH configuration information includes information about an RACH resource and a preamble; sending the RACH configuration information to a terminal device, to indicate the terminal device to send the preamble to the neighboring cell by using the RACH resource; receiving, from the neighboring cell, an uplink TA of the neighboring cell that is determined based on the preamble; and sending the uplink TA of the neighboring cell to the terminal device. The uplink TA of the neighboring cell represents an uplink TA between the terminal device and the neighboring cell.

Optionally, the method is performed by a location management device or a serving cell.

The serving cell mentioned in this application represents a network device in the serving cell, and the network device may be referred to as a serving base station.

In the method provided in the first aspect or the second aspect, the terminal device obtains the uplink TA between the terminal device and the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

According to a third aspect, a signal transmission method is provided. The method includes: receiving SRS resource configuration information from a network device, where the SRS resource configuration information includes information about a cell that has a spatial association with an SRS resource indicated by the SRS resource configuration information; and sending, in a spatial direction corresponding to a target downlink reference signal of the cell, an SRS to the cell by using the SRS resource.

Optionally, the cell that is indicated by the SRS resource configuration information and that has the spatial association with the SRS resource may be a neighboring cell, or may be a serving cell.

Optionally, the network device is a location management device or a serving cell.

The SRS resource configuration information includes the information about the cell that has the spatial association with the SRS resource indicated by the SRS resource configuration information, but does not include information about a beam of a downlink reference signal of the cell. In other words, the SRS resource configuration information associates space of the SRS resource with a cell, instead of associating the space of the SRS resource with a downlink reference signal of a cell. It should be understood that the space of the SRS resource is associated with a cell instead of a downlink reference signal of the cell, so that a terminal device is allowed to independently determine a spatial direction corresponding to a downlink reference signal of the cell to send the SRS. In this way, directional sending of the SRS may be implemented, and flexibility of selecting a sending direction of the SRS by the terminal device may be further implemented.

Therefore, the cell that has the spatial association with the SRS resource is configured for the terminal device, so that the terminal device may send the SRS to the cell in the spatial direction corresponding to the downlink reference signal of the cell. In this way, directional sending of the SRS may be implemented. In addition, the terminal device is allowed to independently determine a spatial direction corresponding to a downlink reference signal of the cell to send the SRS. In this way, flexibility of selecting a sending direction of the SRS by the terminal device may be further improved.

With reference to the third aspect, in a possible implementation of the third aspect, the SRS resource configuration information further includes information about a reference signal type of the cell. A type of the target downlink reference signal is the reference signal type indicated by the SRS resource configuration information.

With reference to the third aspect, in a possible implementation of the third aspect, the method further includes: measuring a downlink reference signal whose reference signal type of the cell is the reference signal type indicated by the SRS resource configuration information, to obtain a reference signal measurement result. The target downlink reference signal is determined based on the reference signal measurement result.

The reference signal type of the cell that has the spatial association with the SRS resource is configured for the terminal device, so that the terminal device may be indicated to measure only a reference signal corresponding to the reference signal type of the cell. In this way, measurement efficiency may be improved.

With reference to the third aspect, in a possible implementation of the third aspect, the SRS resource configuration information further includes information indicating whether to directionally send the SRS to the cell. The sending, in a spatial direction corresponding to a target downlink reference signal of the cell, an SRS to the cell by using the SRS resource includes: when the SRS resource configuration information indicates information for directionally sending the SRS to the cell, sending, in the spatial direction corresponding to the target downlink reference signal of the cell, the SRS to the cell by using the SRS resource.

Optionally, the method further includes: when the SRS resource configuration information indicates information for non-directionally sending the SRS to the cell, sending the SRS to the cell in an omnidirectional spatial direction by using the SRS resource.

According to a fourth aspect, a signal transmission method is provided. The method includes: generating SRS resource configuration information, where the SRS resource configuration information includes information about a cell that has a spatial association with an SRS resource indicated by the SRS resource configuration information; and sending the SRS resource configuration information to a terminal device.

Optionally, the cell that is indicated by the SRS resource configuration information and that has the spatial association with the SRS resource may be a neighboring cell, or may be a serving cell.

Optionally, the method is performed by a location management device or a serving cell.

With reference to the fourth aspect, in a possible implementation of the fourth aspect, the SRS resource configuration information further includes information about a reference signal type of the cell.

The reference signal type of the cell that has the spatial association with the SRS resource is configured for the terminal device, so that the terminal device may be indicated to measure only a reference signal corresponding to the reference signal type of the cell. In this way, measurement efficiency may be improved.

With reference to the fourth aspect, in a possible implementation of the fourth aspect, the SRS resource configuration information further includes information indicating whether to directionally send an SRS to the cell.

In the method provided in the third aspect or the fourth aspect, the cell that has the spatial association with the SRS resource is configured for the terminal device, so that the terminal device may send the SRS to the cell in the spatial direction corresponding to the downlink reference signal of the cell. In this way, directional sending of the SRS may be implemented. In addition, the terminal device is allowed to independently determine a spatial direction corresponding to a downlink reference signal of the cell to send the SRS. In this way, flexibility of selecting a sending direction of the SRS by the terminal device may be further improved.

Optionally, the method provided in the first aspect may be combined with the method provided in the third aspect.

For example, in the method provided in the third aspect, a method for sending an SRS to a neighboring cell may include the method provided in the first aspect.

For another example, in the method provided in the first aspect, an SRS resource of a terminal device may be configured by using the method provided in the third aspect.

Optionally, the method provided in the second aspect may be combined with the method provided in the fourth aspect.

For example, in the method provided in the fourth aspect, a method for sending an SRS to a neighboring cell may include the method provided in the second aspect.

For another example, in the method provided in the second aspect, an SRS resource of a terminal device may be configured by using the method provided in the fourth aspect.

According to a fifth aspect, a communications apparatus is provided. The communications apparatus may be configured to perform the method in the first aspect, the second aspect, the third aspect, or the fourth aspect.

Optionally, the communications apparatus may include a module configured to perform the method in the first aspect, the second aspect, the third aspect, or the fourth aspect.

According to a sixth aspect, a communications apparatus is provided. The communications apparatus includes a processor, and the processor is coupled to a memory. The memory is configured to store a computer program or instructions, and the processor is configured to execute the computer program or the instructions stored in the memory, so that the method in the first aspect, the second aspect, the third aspect, or the fourth aspect is performed.

For example, the processor is configured to execute the computer program or the instructions stored in the memory, so that the communications apparatus performs the method in the first aspect, the second aspect, the third aspect, or the fourth aspect.

Optionally, the communications apparatus includes one or more processors.

Optionally, the communications apparatus may further include the memory coupled to the processor.

Optionally, the communications apparatus may include one or more memories.

Optionally, the memory may be integrated with the processor, or separately disposed.

Optionally, the communications apparatus may further include a transceiver.

According to a seventh aspect, a chip is provided. The chip includes a processing module and a communications interface. The processing module is configured to control the communications interface to communicate with the outside, and the processing module is further configured to perform the method in the first aspect, the second aspect, the third aspect, or the fourth aspect.

Optionally, the processing module is a processor.

According to an eighth aspect, a computer-readable storage medium is provided. The computer-readable storage medium stores a computer program (which may also be referred to as instructions or code) used to perform the method in the first aspect, the second aspect, the third aspect, or the fourth aspect.

For example, when the computer program is executed by a computer, the computer is enabled to perform the method in the first aspect, the second aspect, the third aspect, or the fourth aspect. The computer may be a communications apparatus.

According to a ninth aspect, a computer program product is provided. The computer program product includes a computer program (which may also be referred to as instructions or code). When the computer program is executed by a computer, the computer is enabled to perform the method in the first aspect, the second aspect, the third aspect, or the fourth aspect. The computer may be a communications apparatus.

According to a tenth aspect, a communications system is provided. The communications system includes a location management device, a serving cell, and a neighboring cell.

With reference to the tenth aspect, in a possible implementation of the tenth aspect, the neighboring cell is configured to send RACH configuration information to the location management device or the serving cell, where the RACH configuration information includes information about an RACH resource and a preamble. The location management device or the serving cell is configured to send the RACH configuration information to a terminal device. The neighboring cell is further configured to: receive, from the terminal device, the preamble sent by using the RACH resource; determine an uplink TA of the neighboring cell based on the preamble; and send a random access response message to the terminal device, where the random access response message carries the uplink TA of the neighboring cell; or send the uplink TA of the neighboring cell to the location management device or the serving cell. When the neighboring cell sends the uplink TA of the neighboring cell to the location management device or the serving cell, the location management device or the serving cell is further configured to send the uplink TA of the neighboring cell to the terminal device.

The serving cell in the communications system refers to a network device in the serving cell, for example, may be referred to as a serving base station. The neighboring cell in the communications system refers to a network device in the neighboring cell, for example, may be referred to as a neighboring base station.

In the communications system in this implementation, the terminal device obtains the uplink TA between the terminal device and the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

With reference to the tenth aspect, in another possible implementation of the tenth aspect, the location management device or the serving cell is configured to generate sounding reference signal SRS resource configuration information, where the SRS resource configuration information includes information about a neighboring cell that has a spatial association with an SRS resource indicated by the SRS resource configuration information. The location management device or the serving cell is configured to send the SRS resource configuration information to a terminal device. The neighboring cell is configured to receive an SRS sent, by using the SRS resource, by the terminal device in a spatial direction corresponding to a target downlink reference signal of the neighboring cell.

In the communications system in this implementation, the cell that has the spatial association with the SRS resource is configured for the terminal device, so that the terminal device may send the SRS to the cell in the spatial direction corresponding to the downlink reference signal of the cell. In this way, directional sending of the SRS may be implemented, and transmission efficiency of the SRS may be improved. In addition, space of the SRS resource is associated with a cell instead of a downlink reference signal of the cell, so that the terminal device is allowed to independently determine a spatial direction corresponding to a downlink reference signal of the cell to send the SRS. In this way, directional sending of the SRS may be implemented, and flexibility of selecting a sending direction of the SRS by the terminal device may be further implemented.

Based on the foregoing description, in this application, the terminal device obtains the uplink TA between the terminal device and the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

In addition, in this application, the cell that has the spatial association with the SRS resource is configured for the terminal device, so that the terminal device may send the SRS to the cell in the spatial direction corresponding to the downlink reference signal of the cell. In this way, directional sending of the SRS may be implemented. In addition, the terminal device is allowed to independently determine a spatial direction corresponding to a downlink reference signal of the cell to send the SRS. In this way, flexibility of selecting a sending direction of the SRS by the terminal device may be further improved.

## BRIEF DESCRIPTION OF DRAWINGS

FIG. 1 is a schematic diagram of a locating principle of a UTDOA locating method;
FIG. 2 and FIG. 3 are schematic diagrams of communications architectures applicable to an embodiment of this application;
FIG. 4 is a schematic diagram of a communications system applicable to an embodiment of this application;
FIG. 5 is a schematic flowchart of a signal transmission method according to an embodiment of this application;

FIG. 6 is a schematic flowchart of a signal transmission method according to another embodiment of this application;
FIG. 7 is a schematic block diagram of a communications apparatus according to an embodiment of this application;
FIG. 8 is another schematic block diagram of a communications apparatus according to an embodiment of this application;
FIG. 9 is a schematic block diagram of a terminal device according to an embodiment of this application;
FIG. 10 is a schematic block diagram of a network device according to an embodiment of this application; and
FIG. 11 is a schematic block diagram of a communications system according to an embodiment of this application.

**DESCRIPTION OF EMBODIMENTS**

The following describes technical solutions of this application with reference to accompanying drawings.

Unless otherwise defined, all technical and scientific terms used in this specification have a same meaning as that usually understood by a person skilled in the art of this application. The terms used in the specification of this application are merely for the purpose of describing specific embodiments, and are not intended to limit this application.

For ease of understanding the embodiments of this application, the following first describes some terms used in the embodiments of this application.

1. Beam

In a 5G system or an NR system, high-frequency communication is used, that is, data is transmitted by using a signal of a high frequency band (for example, a frequency band greater than 6 GHz). A main problem of high-frequency communication is that energy of a signal sharply decreases as a transmission distance increases, resulting in a short transmission distance of the signal. To overcome this problem, an analog beam technology is proposed for high-frequency communication. The analog beam technology means that signal energy is concentrated in a small range by using a large-scale antenna array, to form a signal similar to a light beam, thereby increasing a transmission distance. This signal similar to a light beam may be referred to as an analog beam, which is referred to as a beam for short. That is, in the 5G system or the NR system, a network device may generate different beams, different beams point to different transmission directions, and the network device may send or receive signals by using different beams. A terminal device may also generate different beams, different beams point to different transmission directions, and the terminal device may send or receive signals by using different beams. For example, in uplink signal transmission, when a receive beam of the network device matches a transmit beam of the terminal device, the network device may effectively receive a signal sent by the terminal device.

The beam in an NR protocol may be embodied as a spatial domain filter (spatial domain filter) that is also referred to as a spatial filter (spatial filter) or a spatial parameter (spatial parameter). A beam used to send a signal may be referred to as a transmit beam (transmission beam, Tx beam), or may be referred to as a spatial domain transmit filter (spatial domain transmission filter) or a spatial transmit parameter (spatial transmission parameter). A beam used to receive a signal may be referred to as a receive beam (reception beam, Rx beam), or may be referred to as a spatial domain receive filter (spatial domain receive filter) or a spatial receive parameter (spatial RX parameter).

The transmit beam may refer to distribution of signal strength formed in different directions in space after a signal is transmitted by using an antenna, and the receive beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, and the terminal device feeds back measured resource quality, so that the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indication, TCI) resource in downlink control information (downlink control information, DCI).

Optionally, a plurality of beams whose communication features are the same or similar may be considered as one beam.

One beam may include one or more antenna ports, configured to transmit a data channel, a control channel, a sounding signal, and the like. The one or more antenna ports forming the beam may also be considered as one antenna port set.

In the embodiments of this application, unless otherwise specified, the beam is a transmit beam of the network device.

During beam measurement, each beam of the network device corresponds to one resource. Therefore, an index of the resource may be used to uniquely identify the beam corresponding to the resource.

A technology for forming a beam may be a beamforming (beam forming) technology or another technology. Through the beamforming technology, a higher antenna array gain may be obtained by being oriented to a specific direction in space. The beamforming technology may be specifically a digital beamforming technology, an analog beamforming technology, or a hybrid digital/analog beamforming technology. Analog beamforming may be implemented by using a phase shifter. A radio frequency chain (radio frequency chain, RF chain) adjusts a phase by using the phase shifter, to control a change in an analog beam direction. Therefore, one radio frequency chain can generate only one analog beam at a same moment.

The radio frequency chain may also be referred to as a radio frequency channel. That is, one radio frequency channel can generate only one beam at a same moment.

A beam of a downlink reference signal mentioned in this application may be a beam of any one of the following reference signals: an SSB, a CSI-RS, and a PRS.

Different reference signal numbers each may indicate a beam transmit direction of a reference signal.

2. Beam pairing relationship

The beam pairing relationship represents a pairing relationship between a transmit beam and a receive beam, namely, a pairing relationship between a spatial transmit filter and a spatial receive filter. A relatively large beamforming gain may be obtained by transmitting a signal between the transmit beam and the receive beam that have the beam pairing relationship.

A transmit end and a receive end may obtain the beam pairing relationship by performing beam training. For example, the transmit end may send a reference signal in a beam sweeping manner, and the receive end may also receive the reference signal in the beam sweeping manner. For another example, the transmit end may form different directional beams in space through beamforming, and may perform polling on a plurality of different directional beams, to transmit a reference signal by using the different directional beams, so that a power for transmitting the reference signal can reach a maximum value in a direction directed by a transmit beam. The receive end may also form different directional beams in space through beamforming, and may perform polling on a plurality of different directional beams, to receive a reference signal by using the different directional beams, so that a power for receiving the reference signal by the receive end can reach a maximum value in a direction directed by a receive beam.

By traversing each transmit beam and each receive beam, the receive end may perform channel measurement based on the received reference signal, and report a measurement result to the transmit end. For example, the receive end may report, to the transmit end, a part of reference signal resources with large reference signal received powers (reference signal receiving powers, RSRPs), and for example, report an identifier of the reference signal resource, so that the transmit end, during transmission of data or signaling, sends and receives a signal by using a beam pairing relationship with good channel quality.

3. Beam management

A network device may generate beams in different directions. Specifically, a beam in which direction is used to communicate with a terminal device is determined by performing beam management.

The beam management mainly includes the following steps:

Step 1: The network device configures a beam resource.

In an example, that the network device configures a beam resource includes: The network device generates measurement configuration information (that is, beam measurement configuration information), and sends the measurement configuration information to the terminal device.

The measurement configuration information mainly includes two parts: resource configuration information and reporting configuration information.

The resource configuration information is information related to a measurement resource. The resource configuration information may be configured in a protocol by using a three-level structure (resource configuration (resourceConfig) - resource set (resourceSet) - resource (resource)).

The reporting configuration information is information related to measurement result reporting. The reporting configuration information may be configured in the protocol by using a reporting configuration (ReportConfig).

The network device may send the measurement configuration information to the terminal device by using radio resource control (radio resource control, RRC) signaling.

Step 2: The terminal device measures communication quality of a beam.

The network device sends a downlink signal (that is, a beam) on a resource unit corresponding to a resource configured in the resource configuration information. The terminal device receives the downlink signal on the resource unit corresponding to the resource configured in the resource configuration information, and measures the downlink signal based on the measurement configuration information, to obtain quality of the downlink signal, that is, communication quality of the beam.

Step 3: The terminal device selects an optimal beam, and the terminal device reports the optimal beam to the network device.

In an example, the terminal device sends a beam measurement report to the network device, to indicate the optimal beam. The beam measurement report may include indexes, quality, and the like of one or more resources.

The beam measurement report may be carried on a physical uplink control channel (physical uplink control channel, PUCCH) or a physical uplink shared channel (physical uplink shared channel, PUSCH).

4. Beam management resource

The beam management resource is a resource used for beam management, and may also be represented as a resource used to calculate and measure beam quality. The beam quality includes layer 1 reference signal received power (layer 1 reference signal received power, L1-RSRP), layer 1 reference signal received quality (layer 1 reference signal received quality, L1-RSRQ), and the like. Specifically, the beam management resource may include a synchronization signal, a broadcast channel, a downlink channel measurement reference signal, a tracking signal, a downlink control channel demodulation reference signal, a downlink shared channel demodulation reference signal, an uplink sounding reference signal, an uplink random access signal, and the like.

5. Beam indication information

Beam indication information is used to indicate a beam used for transmission, and the beam includes a transmit beam and/or a receive beam. The beam indication information includes at least one of a beam number, a beam management resource number, an uplink signal resource number, a downlink signal resource number, an absolute index of a beam, a relative index of a beam, a logical index of a beam, an index of an antenna port corresponding to a beam, an index of an antenna port group corresponding to a beam, an index of a downlink signal corresponding to a beam, a time index of a downlink synchronization signal block corresponding to a beam, beam pair link (beam pair link, BPL) information, a transmit parameter (Tx parameter) corresponding to a beam, a receive parameter (Rx parameter) corresponding to a beam, a transmit weight corresponding to a beam, a weight matrix corresponding to a beam, a weight vector corresponding to a beam, a receive weight corresponding to a beam, an index of a transmit weight corresponding to a beam, an index of a weight matrix corresponding to a beam, an index of a weight vector corresponding to a beam, an index of a receive weight corresponding to a beam, a reception codebook corresponding to a beam, a transmit codebook corresponding to a beam, an index of a reception codebook corresponding to a beam, and an index of a transmit codebook corresponding to a beam, where the downlink signal includes any one of a synchronization signal, a broadcast channel, a broadcast signal demodulation signal, a channel state information downlink signal (channel state information reference signal, CSI-RS), a cell-specific reference signal (cell-specific reference signal, CS-RS), a UE-specific reference signal (user equipment-specific reference signal, US-RS), a downlink control channel demodulation reference signal, a downlink data channel demodulation reference signal, and a downlink phase noise tracking signal. The uplink signal includes any one of an uplink random access sequence, an uplink sounding reference signal, an uplink control channel demodulation reference signal, an uplink data channel demodulation reference signal, and an uplink phase noise tracking signal. Optionally, the network device may further allocate a QCL identifier to a beam that has a quasi-co-location (quasi-co-location, QCL) relationship (which is described below) in beams associated with a frequency resource group. The beam may also be referred to as a spatial transmission filter, the transmit beam may also be referred to as a spatial transmit filter, and the receive beam may also be referred to as a spatial receive filter. The beam indication information may be further represented as a transmission configuration number (transmission configuration index, TCI). The TCI may include a plurality of parameters such as a cell number, a bandwidth part number, a reference signal identifier, a synchronization signal block identifier, and a QCL type.

6. Beam quality

A measurement indicator for measuring beam quality is not limited in this application.

The measurement indicator for measuring beam quality includes but is not limited to:

reference signal received power (reference signal received power, RSRP);
reference signal received quality (reference signal received quality, RSRQ);
reference signal received strength indicator (received signal strength indicator, RSSI);

signal to interference plus noise ratio (signal to interference and noise ratio, SINR);
block error rate (block error rate, BLER); and
channel quality indicator (channel quality indicator, CQI).

7. Timing advance (timing advance, TA)

To ensure orthogonality of uplink transmission and avoid intra-cell (intra-cell) interference, a base station (for example, an eNodeB) requires that signals from different terminal devices in a same subframe but on different frequency domain resources arrive at the base station at substantially the same time, that is, the base station requires uplink time synchronization. As long as the base station receives, within a cyclic prefix (cyclic prefix, CP) range, uplink data sent by a terminal device, the base station can correctly decode the uplink data. Therefore, the uplink time synchronization requires that time points at which the signals from the different terminal devices in the same subframe arrive at the base station fall within a CP. To ensure uplink time synchronization on a base station side, LTE proposes an uplink timing advance (timing advance, TA) mechanism. TA represents a period of time, and is approximately round-trip time of transmission of an electromagnetic wave between a terminal device and a base station. A plurality of terminal devices send uplink data to a same base station based on TAs from the plurality of terminal devices to the base station, so that signals from the plurality of terminal devices arrive at the base station at substantially the same time. In a current technology, the TA mechanism is only applicable to a terminal device and a base station serving the terminal device.

As described above, in some cases, for example, in an uplink time difference of arrival (uplink time difference of arrival, UTDOA) locating method, a neighboring base station needs to receive, for measurement, an uplink signal sent by a terminal device.

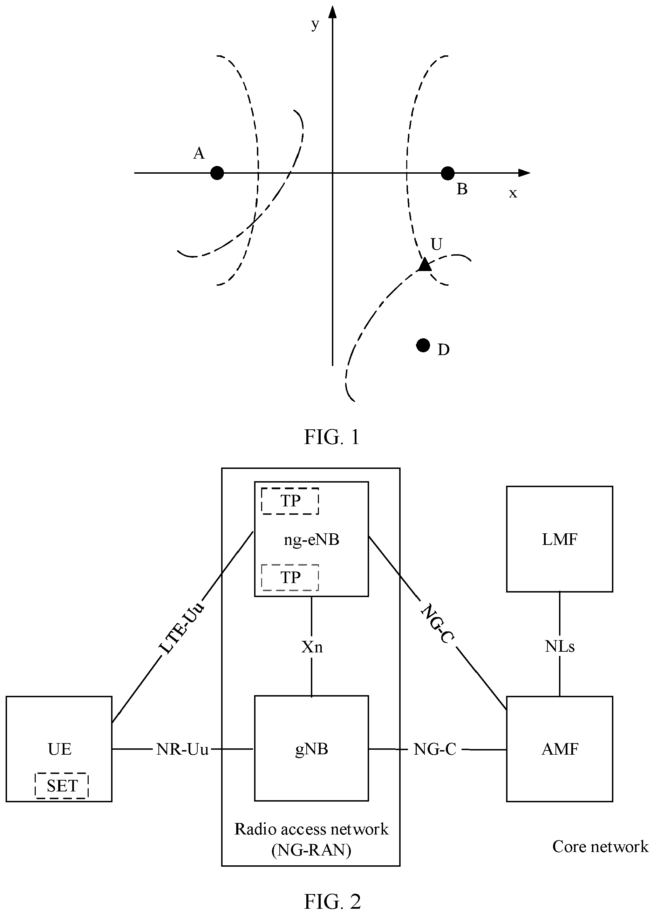

In UTDOA, the terminal device sends an SRS, a plurality of base stations including the neighboring base station receive the SRS sent by the terminal device and measure receiving time information of the SRS, and a location management device calculates an uplink time difference of arrival based on the receiving time information of the SRS received by the plurality of base stations, and may locate the terminal device. FIG. 1 shows a locating principle of the UTDOA locating method. A point A, a point B, and a point D represent three base stations. Coordinates of the point A are (x1, y1), coordinates of the point B are (x2, y2), and coordinates of the point D are (x3, y3). A point U represents a to-be-located terminal device, and coordinates of the point U are denoted by (x4, y4). It is assumed that transmission times of a signal (for example, an SRS) from the point U to the point A, the point B, and the point D are respectively t1, t2, and t3. The following two hyperbolic equations may be established:

$$\sqrt{(x1-x4)^2 + (y1-y4)^2} - \sqrt{(x2-x4)^2 + (y2-y4)^2} = c(t1-t2)$$

$$\sqrt{(x3-x4)^2 + (y3-y4)^2} - \sqrt{(x1-x4)^2 + (y1-y4)^2} = c(t3-t1)$$

Herein, $c$ represents the speed of light.

The coordinates (x4, y4) of the point U may be obtained by solving the foregoing two equations. That is, the terminal device is located.

In the UTDOA locating method, a neighboring cell needs to receive, for measurement, an SRS sent by the terminal device. In the current technology, the terminal device cannot learn of a TA between the terminal device and the neighboring cell. Therefore, when sending the SRS to the neighboring cell, the terminal device cannot adjust an occasion for sending the SRS. Consequently, the SRS sent by the terminal device may cause interference to another signal of the neighboring cell.

The embodiments of this application provide a signal transmission method and an apparatus, so that a terminal device may obtain an uplink TA between the terminal device and a neighboring cell, thereby avoiding, to some extent, interference caused by an SRS sent by the terminal device to the neighboring cell to another signal of the neighboring cell.

The embodiments of this application may be applied to the UTDOA locating scenario shown in FIG. 1, but this application is not limited thereto. The embodiments of this application may be further applied to another scenario in which a neighboring base station needs to receive and measure a signal sent by a terminal device.

The technical solutions in the embodiments of this application may be applied to various communications systems, for example, a long term evolution (long term evolution, LTE) system, a fifth generation (the 5th Generation, 5G) mobile communications system, a new radio (new radio, NR) system, a machine-to-machine (machine-to-machine, M2M) communications system, another future evolved communications system, or the like.

FIG. 2 is a schematic diagram of a communications architecture applicable to an embodiment of this application. The communications architecture includes a terminal device (shown as UE in FIG. 2), a radio access network (an NG-RAN), and a core network.

The core network includes an access and mobility management function (access and mobility management function, AMF), a location management function (location management function, LMF), and other functions. The AMF functions as a gateway and the like, and the LMF functions as a positioning center and the like. The AMF and LMF are connected through an NLs interface.

The radio access network (NG-RAN) includes one or more ng-eNBs and gNBs. The ng-eNB represents a long term evolution (long term evolution, LTE) base station that accesses a 5G core network. The gNB represents a 5G base station that accesses the 5G core network. Communication between an ng-eNB and a gNB, two ng-eNBs, or two gNBs is performed through an Xn interface. The Xn interface may also be referred to as an XnAP interface. The radio access network is connected to the core network via the AMF through an NG-C interface.

The terminal device is connected to the radio access network via the ng-eNB through an LTE-Uu interface. The terminal device may be alternatively connected to the radio access network via the gNB through an NR-Uu interface.

The core network may directly communicate with the terminal device by using a lightweight presentation protocol (lightweight presentation protocol, LPP).

It should be understood that the communications architecture may include one or more terminal devices, for example, one or more terminal device sets (for example, a UE set shown in FIG. 2).

One gNB may send data or control signaling to one or more terminal devices. A plurality of gNBs may simultaneously send data or control signaling to one terminal device.

Alternatively, the ng-eNB in FIG. 2 may be replaced with a transmission point (transmission point, TP) (for example, a TP shown in FIG. 2).

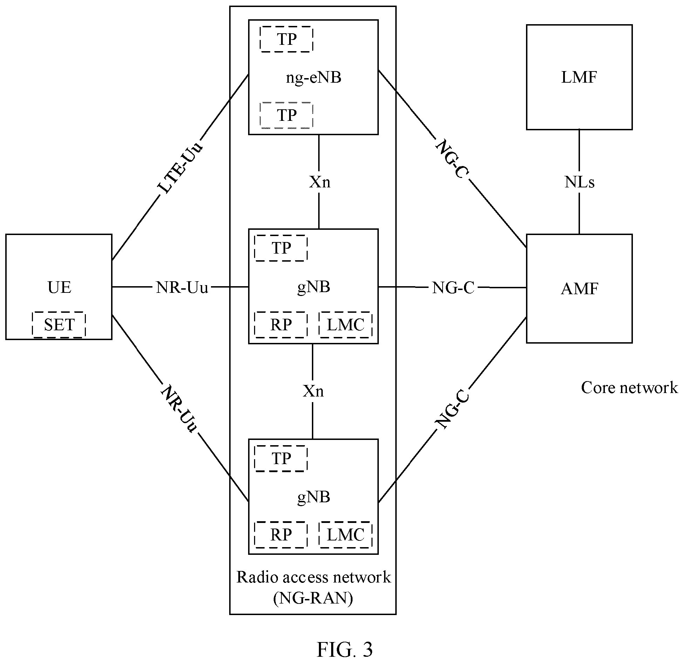

FIG. 3 is a schematic diagram of another communications architecture applicable to an embodiment of this application. Different from the communications architecture shown in FIG. 2, in the communications architecture shown in FIG. 3, a location management component (location management component, LMC) is added to a gNB, and the LMC may perform some functions of an LMF. That is, the radio access network may implement some LMF functions that the LMC may perform.

For example, if the gNB in the communications architecture shown in FIG. 3 participates in the UTDOA locating shown in FIG. 1, the gNB does not need to report, to the core network, a receiving time that is of an SRS sent by the terminal device and that is obtained through measurement, thereby reducing signaling overheads and reducing a transmission delay.

Descriptions of other parts shown in FIG. 3 are the same as the descriptions of the parts in FIG. 2, and details are not described.

In an example, the UTDOA locating shown in FIG. 1 may be implemented by using the ng-eNB and the gNB in the communications architecture shown in FIG. 2 or FIG. 3. For example, the gNB or the eNB may be used as a base station participating in location measurement, the UE may be used as a to-be-located terminal device, and the LMF or the LMC may be used as a location management device. The location management device is configured to collect measurement information reported by the base station and the UE and location information of the base station, and is further configured to perform location calculation based on the measurement information and a location of the base station, to determine a location of the UE.

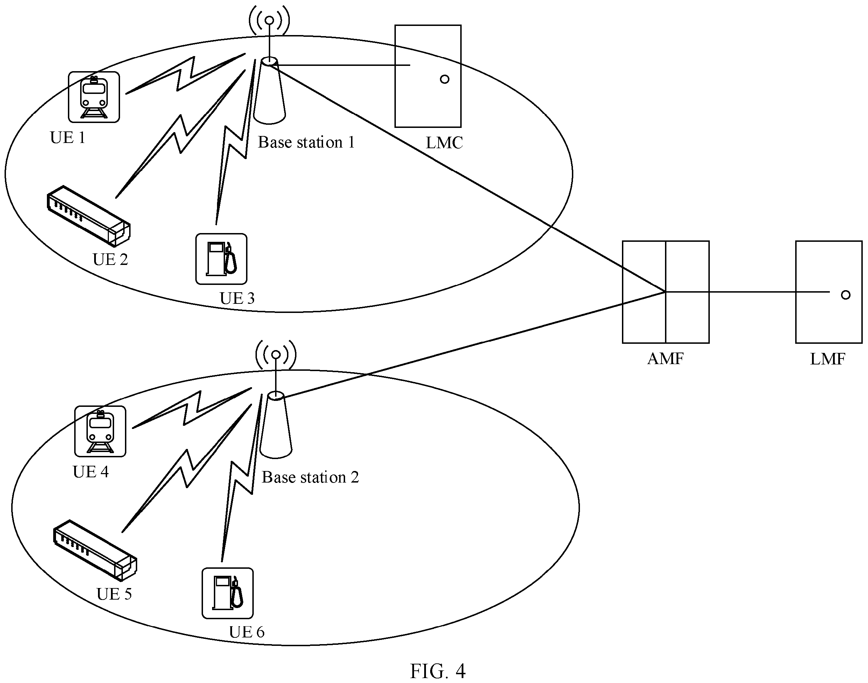

FIG. 4 is a schematic diagram of a communications system applicable to an embodiment of this application. As shown in FIG. 4, a base station (Base station) 1, a base station 2, and user equipment (user equipment, UE) 1 to UE 6 form a communications system. In the communications system, the UE 1 to the UE 3 communicate with the base station 1, and the UE 4 to the UE 6 communicate with the base station 2. For example, the UE 1 to the UE 3 may send uplink data to the base station 1, the base station 1 receives the uplink data sent by the UE 1 to the UE 3, and the base station 1 may further send downlink data to the UE 1 to the UE 3.

The base station 1 may have a locating function, for example, the base station 1 has an LMC. In an example, the base station 1 is a gNB with an LMC, as shown in FIG. 3. Alternatively, the base station 1 may be connected to a locating server. The UE 1 to the UE 3 may communicate with the LMC by using the base station 1.

The base station 2 may not have a locating function, and is not connected to a locating server.

Both the base station 1 and the base station 2 may be connected to the AMF of the core network. The base station 1 and the base station 2 may communicate with the LMF by using the AMF. The UE 1 to the UE 3 may communicate with the AMF and the LMF by using the base station 1. The UE 4 to the UE 6 may communicate with the AMF and the LMF by using the base station 1.

The terminal device in the embodiments of this application includes a handheld device, a vehiclemounted device, a wearable device, or a computing device that has a wireless communication function. In an example, the terminal device may be user equipment (user equipment, UE), an access terminal, a subscriber unit, a subscriber station, a mobile station, a mobile console, a remote station, a remote terminal, a mobile device, a user terminal, a terminal, a wireless communications device, a user agent or a user apparatus, a handheld device that has a wireless communication function, a computing device, another processing device connected to a wireless modem, a vehiclemounted device, a wearable device, or the like. For example, the terminal device may be a mobile phone (mobile phone), a tablet computer, or a computer with a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal device may be the terminal device in the 5G network, the terminal device in the future evolved public land mobile communication network (public land mobile network, PLMN), or the like.

The network device in the embodiments of this application may be configured to communicate with one or more terminal devices, or may be configured to communicate with one or more base stations having some terminal functions (for example, communication between a macro base station and a micro base station, such as an access point). The network device may be referred to as a base station. The base station may be in a plurality of forms, for example, a macro base station, a micro base station, a relay station, and an access point. For example, the network device in the embodiments of this application may be a base station in a 5G network, or may be an evolved NodeB (evolutional Node B, eNB or eNodeB) in a long term evolution (long term evolution, LTE) system. The base station in the 5G network may also be referred to as a transmission reception point (transmission reception point, TRP) or a next-generation NodeB (next generation Node B, gNB).

In an example, the network device in the embodiments of this application may be the gNB or the eNB shown in FIG. 2 or FIG. 3.

In another example, the network device in the embodiments of this application may be the base station 1 or the base station 2 shown in FIG. 4.

Optionally, when this application is applied to the locating scenario shown in FIG. 1, the network device in the embodiments of this application may have a location measurement unit (location measurement unit, LMU) or a transmission measurement function (transmission measurement function, TMF). For example, in LTE, the LMU measures a time difference of arrival by receiving an SRS sent by the terminal device. The LMU of the network device may be integrated with the network device, or may be separately placed.

The location management device in the embodiments of this application represents a core network device having a location management function, for example, the LMF shown in FIG. 2 or FIG. 4.

Alternatively, the location management device in the embodiments of this application may represent an apparatus that has a location management function and that may be placed in an access network device, for example, the LMC shown in FIG. 3 or FIG. 4.

A serving cell in the embodiments of this application represents a network device in a serving cell (Serving cell), which may also be referred to as a serving base station. A neighboring cell in the embodiments of this application represents a network device in a neighboring cell (neighbor cell), which may also be referred to as a neighboring base station. Optionally, the "cell" described in this application may be replaced with a "base station in the cell".

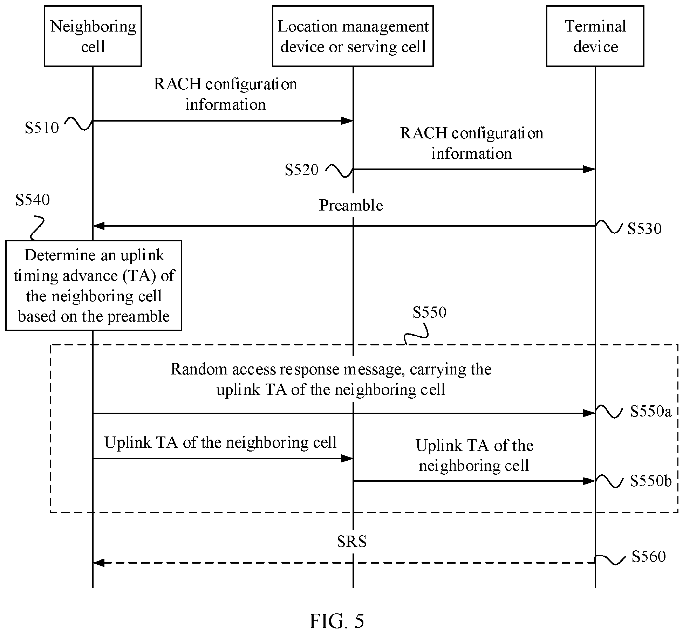

FIG. 5 is a schematic flowchart of a signal transmission method according to an embodiment of this application. The method includes the following steps.

S510. A neighboring cell sends random access channel (random access channel, RACH) configuration information to a location management device or a serving cell.

The RACH configuration information includes information about an RACH resource and/or information about a preamble (preamble).

The information about the RACH resource may include time-frequency resource configuration information. The information about the RACH resource may include information such as a number of the preamble, and a subcarrier spacing or a root sequence of the preamble.

Optionally, the RACH resource configured in the RACH configuration information may be a dedicated RACH resource of the neighboring cell.

For example, the RACH resource configured in the RACH configuration information is an RACH resource reserved by the neighboring cell specifically for neighboring cell TA measurement that needs to be performed during locating.

As described above, the neighboring cell mentioned in this embodiment of this application represents a network device in the neighboring cell, and the network device may be referred to as a neighboring base station. For example, the neighboring cell represents a network device configured to perform uplink locating for a terminal device, or a network device that receives an uplink reference signal of the terminal device.

S520. After receiving the RACH configuration information from the neighboring cell, the location management device or the serving cell sends the RACH configuration information to the terminal device.

Optionally, the location management device or the serving cell may select some configuration information from the RACH configuration information reported by the neighboring cell in step S510, and send the some configuration information to the terminal device.

For example, the RACH configuration information reported by the neighboring cell in step S510 is denoted by first RACH configuration information. The RACH configuration information sent by the location management device or the serving cell to the terminal device in step S520 is denoted by second RACH configuration information. The second RACH configuration information includes some information about the RACH resource and some information about the preamble in the first RACH configuration information.

For example, the information about the RACH resource and the information about the preamble that are included in the second RACH configuration information may uniquely identify a terminal device.

Optionally, the location management device is the LMF shown in FIG. 2. The location management device may send the RACH configuration information to the terminal device by using the serving cell. The serving cell receives the RACH configuration information sent by the location management device, and transparently transmits the RACH configuration information to the terminal device. For example, the location management device may communicate with the terminal device by using an LPP protocol.

Optionally, the location management device is the LMC in FIG. 3, that is, the location management device is deployed in an access network device. Therefore, the location management device may directly communicate with the terminal device.

S530. After receiving the RACH configuration information of the neighboring cell from the location management device or the serving cell, the terminal device sends a preamble to the neighboring cell by using the RACH resource.

If the RACH configuration information includes the information about the RACH resource, the terminal device selects a preamble based on the RACH resource configured in the RACH configuration information, and sends the selected preamble to the neighboring cell by using the RACH resource.

If the RACH configuration information does not include the information about the RACH resource, the terminal device may send the preamble to the neighboring cell by using a system-defined RACH resource.

If the RACH configuration information includes the information about the preamble, the terminal device sends the preamble configured in the RACH configuration information to the neighboring cell.

If the RACH configuration information does not include the information about the preamble, the terminal device may send a system-defined preamble to the neighboring cell.

S540. The neighboring cell receives, from the terminal device, the preamble sent by using the RACH resource, and determines an uplink timing advance (TA) of the neighboring cell based on the preamble.

The uplink TA of the neighboring cell mentioned in this specification represents an uplink TA between the terminal device and the neighboring cell.

A manner of calculating the TA based on the preamble sent by the terminal device is a conventional technology, and this is not limited in this specification.

S550. The terminal device receives the uplink TA of the neighboring cell that is determined by the neighboring cell.

Optionally, step S550 includes step S550a: The neighboring cell sends a random access response (random access response, RAR) message to the terminal device, where the random access response message carries the uplink TA of the neighboring cell. The terminal device may obtain the uplink TA of the neighboring cell by parsing the random access response message.

Optionally, step S550 includes step S550b: The neighboring cell sends the uplink TA of the neighboring cell to the location management device or the serving cell, and the location management device or the serving cell sends the uplink TA of the neighboring cell to the terminal device.

For example, the neighboring cell sends a TA report message to the location management device or the serving cell, where the TA report message carries the uplink TA of the neighboring cell. Optionally, the TA report message may further carry the information about the preamble and the RACH resource of the neighboring cell. After receiving the TA report message, the location management device or the serving cell sends a TA indication message to the terminal device, where the TA indication message carries the uplink TA of the neighboring cell.

In this application, the terminal device is configured to randomly access the neighboring cell, so that the neighboring cell may determine the uplink TA between the terminal device and the neighboring cell. The terminal device obtains the uplink TA of the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

Therefore, in this application, the terminal device obtains the uplink TA between the terminal device and the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

Optionally, in the embodiment shown in FIG. 5, the method may further include step S560.

S560. The terminal device sends an SRS to the neighboring cell based on the uplink TA of the neighboring cell.

It should be understood that this embodiment may be applied to the locating scenario shown in FIG. 1. In addition, this embodiment may be further applied to another scenario in which a terminal device sends an uplink signal to a neighboring cell.

For example, in another scenario in which a terminal device sends an uplink signal to a neighboring cell, the terminal device may send an uplink signal including but not limited to an SRS to the neighboring cell based on an uplink TA of the neighboring cell.

It should be further understood that, in the solution provided in this application, the terminal device may obtain the uplink TA between the terminal device and the neighboring cell, so that when the terminal device sends an SRS to the neighboring cell, an SRS sending occasion may be adjusted based on the uplink TA of the neighboring cell, thereby avoiding, to some extent, interference caused by the SRS to another signal of the neighboring cell.

Optionally, in step S510, a plurality of neighboring cells may send respective RACH configuration information to the location management device. The location management device may further select, from the plurality of neighboring cells, a neighboring cell that participates in TA measurement, and then send RACH configuration information of the selected neighboring cell to the terminal device.

Optionally, the neighboring cell (or the neighboring base station) may also be referred to as a transmission measurement function (transmission measurement function, TMF).

Therefore, in the embodiment shown in FIG. 5 of this application, the terminal device obtains the uplink TA between the terminal device and the neighboring cell, so that when the terminal device sends an SRS to the neighboring cell, an SRS sending occasion may be adjusted based on the uplink TA of the neighboring cell, thereby avoiding, to some extent, interference caused by the SRS to another signal of the neighboring cell.

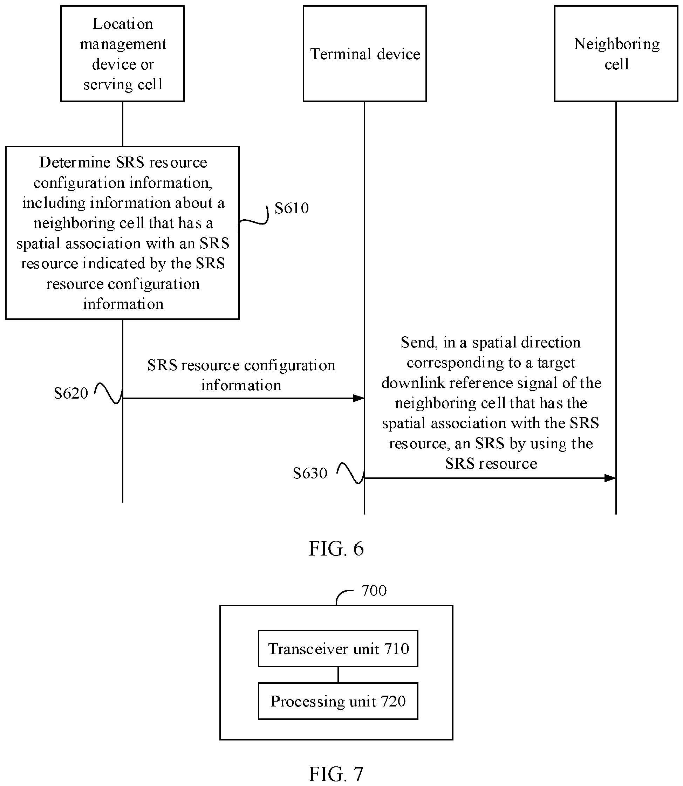

As shown in FIG. 6, another embodiment of this application further provides a signal transmission method. The method includes the following steps.

S610. A location management device or a serving cell determines SRS resource configuration information, where the SRS resource configuration information includes information about a cell that has a spatial association with an SRS resource indicated by the SRS resource configuration information.

In this application, the cell that is indicated by the SRS resource configuration information and that has the spatial association with the SRS resource may be a neighboring cell, or may be the serving cell. In FIG. 6, an example in which the cell that is indicated by the SRS resource configuration information and that has the spatial association with the SRS resource is a neighboring cell is used.

The SRS resource configuration information includes the information about the cell that has the spatial association with the SRS resource indicated by the SRS resource configuration information, but does not include information about a beam of a downlink reference signal of the cell. In other words, the SRS resource configuration information associates space of the SRS resource with a cell, instead of associating the space of the SRS resource with a downlink reference signal of a cell.

For example, the SRS resource configuration information includes time domain information of the SRS resource and/or frequency domain information of the SRS resource.

The time domain information of the SRS resource may include any one or more of the following: a periodicity, an offset (offset), and duration (duration).

The frequency domain information of the SRS resource may include any one or more of the following: bandwidth and a frequency domain start position.

The beam of the downlink reference signal mentioned in this embodiment of this application may be a beam of any one of the following reference signals: an SSB, a CSI-RS, and a PRS.

Different reference signal numbers each may indicate a beam transmit direction of a reference signal.

S620. The location management device or the serving cell sends the SRS resource configuration information to a terminal device.

S630. The terminal device sends, in a spatial direction corresponding to a target downlink reference signal of the cell that has the spatial association with the SRS resource, an SRS to the cell by using the SRS resource.

The target downlink reference signal may be independently determined by the terminal device, instead of configured by the SRS resource configuration information.

The terminal device may determine the target downlink reference signal of the cell based on a current measurement configuration.

For example, the current measurement configuration includes a measurement configuration of a downlink reference signal of the cell, and the terminal device may use the downlink reference signal as the target downlink reference signal.

For another example, the current measurement configuration does not include a measurement configuration of a downlink reference signal of the cell, and the terminal device may independently determine the target downlink reference signal. In an example, the terminal device measures the downlink reference signal of the cell, obtains an optimal beam direction by using a beam measurement result, and uses a downlink reference signal corresponding to the optimal beam direction as the target downlink reference signal of the cell. In this example, the terminal device may associate a spatial direction of the SRS resource for the cell with the optimal beam direction, and then send the SRS in the optimal beam direction, that is, send the SRS in the spatial direction corresponding to the target downlink reference signal.

It should be understood that the space of the SRS resource is associated with a cell instead of a downlink reference signal of the cell, so that the terminal device may be allowed to independently determine a spatial direction corresponding to a downlink reference signal of the cell to send the SRS. In this way, directional sending of the SRS may be implemented, and flexibility of selecting a sending direction of the SRS by the terminal device may be further implemented.

For example, in a case, the terminal device selects a spatial direction of a downlink reference signal of the cell to send the SRS to the cell. After moving, the terminal device may select, based on a specific situation, a spatial direction of another downlink reference signal of the cell, to send the SRS to the cell.

The terminal device may determine, based on a measurement result of the downlink reference signal of the cell, a spatial direction of a downlink reference signal of the cell to send the SRS. For example, the reference signal of the cell includes but is not limited to a downlink positioning reference signal (position reference signal, PRS).

It should be noted that the target downlink reference signal of the cell mentioned in this specification represents a downlink reference signal of the cell. "Target" in the target downlink reference signal is merely intended for distinguishing rather than limitation.

Therefore, the cell that has the spatial association with the SRS resource is configured for the terminal device, so that the terminal device may send the SRS to the cell in the spatial direction corresponding to the downlink reference signal of the cell. In this way, directional sending of the SRS may be implemented, and transmission efficiency of the SRS may be improved.

In addition, the space of the SRS resource is associated with a cell instead of a downlink reference signal of the cell, so that the terminal device is allowed to independently determine a spatial direction corresponding to a downlink reference signal of the cell to send the SRS. In this way, directional sending of the SRS may be implemented, and flexibility of selecting a sending direction of the SRS by the terminal device may be further implemented.

Optionally, in the embodiment shown in FIG. 6, the cell that is indicated by the SRS resource configuration information and that has the spatial association with the SRS resource is a neighboring cell. In step S630, the terminal device sends, in a spatial direction corresponding to a target downlink reference signal of the neighboring cell that has the spatial association with the SRS resource, an SRS to the neighboring cell by using the SRS resource.

It should be understood that, in this embodiment, directional sending of the SRS to the neighboring cell may be implemented by the terminal device, thereby improving efficiency of transmitting the SRS by the terminal device to the neighboring cell.

Optionally, in the embodiment shown in FIG. 6, the SRS resource configuration information further includes information about a reference signal type of the cell. A type of the target downlink reference signal in step S630 is the reference signal type indicated by the SRS resource configuration information.

For example, in step S630, the target downlink reference signal is determined from the downlink reference signal of the cell. A type of the target downlink reference signal is the reference signal type indicated by the SRS resource configuration information. The SRS is sent to the neighboring cell in the spatial direction of the target downlink reference signal by using the SRS resource.

The terminal device may further measure the downlink reference signal of the cell based on the reference signal type that is of the cell and that is indicated by the SRS resource configuration information. The reference signal type may be an SSB, a CSI-RS, a PRS, or the like. This is not limited in this application.

Optionally, in the embodiment shown in FIG. 6, the SRS resource configuration information further includes information about a reference signal type of the cell. The method further includes: The terminal device measures a downlink reference signal whose type of the cell is the reference signal type indicated by the SRS resource configuration information, to obtain a reference signal measurement result, and determines the target downlink reference signal based on the reference signal measurement result.

For example, a reference signal with an optimal measurement value is determined as the target downlink reference signal.

Optionally, the SRS resource configuration information may further configure whether to directionally send the SRS.

Optionally, in the embodiment shown in FIG. 6, the SRS resource configuration information further includes information indicating whether to directionally send the SRS to the cell.

Step S630 includes: when the SRS resource configuration information indicates information for directionally sending the SRS to the cell, sending, in the spatial direction corresponding to the target downlink reference signal of the cell, the SRS to the cell by using the SRS resource.

Optionally, when the SRS resource configuration information indicates information for non-directionally sending the SRS to the cell, the method further includes: sending the SRS to the cell in an omnidirectional spatial direction by using the SRS resource.

The information indicating whether to directionally send the SRS to the cell may be two different values of a same indication identifier. For example, the information indicating directional sending of the SRS to the cell is a case in which a value of the indication identifier is 1, and the information indicating non-directional sending of the SRS to the cell is a case in which the value of the indication identifier is 2.

Alternatively, the information indicating directional sending of the SRS to the cell and the information indicating non-directional sending of the SRS to the cell may be two independent indication identifiers.

Optionally, in the embodiment shown in FIG. 6, the cell that is indicated by the SRS resource configuration information and that has the spatial association with the SRS resource is a neighboring cell. In step S610, the location management device obtains the SRS resource configuration information from the serving cell.

For example, in step S610, the location management device sends an SRS resource request message to the serving cell.

Optionally, the SRS resource request message may further carry the following indication information:

(1) Indication information 1: is used to indicate whether to directionally send the SRS.

If non-directional sending of the SRS is indicated, the serving cell configures, by default, the SRS of the terminal device to be sent in an omnidirectional or beam sweeping form.

If directional sending of the SRS is indicated, a locating server further needs to indicate a quantity of SRS resources required for locating the serving cell. Each SRS resource is used to send the SRS to one target TMF, and a quantity of required SRS resources needs to be greater than or equal to a quantity of TMFs to which the SRS needs to be directionally sent.

(2) Indication information 2: whether to report a beam measurement result of the neighboring cell of the terminal device.

It should be noted that the beam mentioned in this embodiment of this specification may be replaced with "reference signal", or may be replaced with "pilot". The "reference signal" may be, for example, any one of the following: an SSB, a CSI-RS, and a PRS.

If the serving cell is indicated to report the beam measurement result of the neighboring cell of the terminal device, the SRS resource request message may further carry reference signal configuration information of the neighboring cell.

The reference signal configuration information of the neighboring cell may include any one or more of the following: a reference signal type, a frequency domain position, a time domain position, a sequence, a resource number, and the like, and may further include a threshold value for reporting the measurement result.

(3) Indication information 3: is used to indicate whether the serving cell determines a beam direction of the neighboring cell.

If it is indicated that the serving cell determines the beam direction, the serving cell associates a spatial direction of the SRS with a beam of the neighboring cell when configuring the SRS.

In an example, the serving cell may obtain the beam measurement result of the neighboring cell by configuring the terminal device to perform beam measurement on the neighboring cell. When configuring the SRS, the serving cell associates the spatial direction of the SRS with the beam of the neighboring cell.

For example, in step S610, the serving cell generates the SRS resource configuration information of the terminal device based on the SRS resource request message of the location management device, and sends the SRS resource configuration information to the location management device.

In an example, the SRS resource configuration information may include time domain information and/or frequency domain information of the SRS resource.

The time domain information of the SRS resource may include any one or more of the following: a periodicity, an offset (offset), and duration (duration).

The frequency domain information of the SRS resource may include any one or more of the following: bandwidth and a frequency domain start position.

If the SRS resource request message includes the indication information 2, and the indication information 2 indicates to report the beam measurement result of the neighboring cell of the terminal device, the serving cell sends the beam measurement result of the neighboring cell to the location management device, in addition to the SRS resource configuration information.

As described above, the location management device may request the beam measurement result of the neighboring cell from the serving cell by using the indication information 2.

Optionally, the location management device may further obtain the beam measurement result of the neighboring cell from the terminal device.

For example, the location management device sends a beam measurement information request (beam measurement information request) to the terminal device by using an LPP protocol. The beam measurement information request may include a cell list. The cell list may include information about one or more cells, and is used to indicate the terminal device to report a beam measurement result of each cell in the cell list. The location management device receives a beam measurement result of a related cell sent by the terminal device, to obtain the beam measurement result of the neighboring cell of the terminal device.

In an example, information about each cell in the cell list may include a cell identifier (ID) and a downlink reference signal configuration. The cell identifier may include a physical cell identifier (physical cell ID, PCI) or an E-UTRAN cell global identifier (E-UTRAN cell global identifier, ECGI). The downlink reference signal configuration may include any one or more of the following information: a reference signal type, a frequency domain position, a time domain position, and a threshold value for reporting the measurement result.

For example, after completing beam measurement of the neighboring cell, the terminal device reports the beam measurement result of the neighboring cell to the location management device. For example, the terminal device may report the beam measurement result of the related cell to the location management device by using the serving cell.

The beam measurement result may include RSRP values of different beams, or may further include a number of a beam with a strongest signal, or may further include other information related to beam measurement.

Optionally, in the embodiment shown in FIG. 6, the cell that is indicated by the SRS resource configuration information and that has the spatial association with the SRS resource is a neighboring cell. In step S610, the location management device obtains the SRS resource configuration information (denoted by first SRS resource configuration information) from the serving cell. In step S620, the location management device determines second SRS resource configuration information based on the beam measurement result (which may be obtained from the serving cell or the terminal device) of the neighboring cell and the first SRS resource configuration information. The second SRS resource configuration information includes the information about the neighboring cell that has the spatial association with the SRS resource indicated by the first SRS resource configuration information.

For example, in step S620, a corresponding SRS beam of the neighboring cell is configured for the SRS resource.

Configuring the corresponding SRS beam for the neighboring cell may include the following two configuration manners:

Configuration manner 1: The space of the SRS resource is associated with a downlink beam of the neighboring cell.

Configuration manner 2: The spatial space of the SRS resource is associated with the neighboring cell.

In the configuration manner 2, when sending the SRS, the terminal device independently determines to associate which beam (that is, which downlink reference signal) of the neighboring cell with the spatial direction of the SRS resource.

It should be understood that the configuration manner 2 may enable the terminal device to flexibly determine a downlink reference signal that has a spatial association with the SRS resource. This embodiment is applicable to a scenario in which the terminal device is in a moving state.

Optionally, in step S610, the location management device obtains beam measurement results of a plurality of neighboring cells, and the location management device may select, from the plurality of neighboring cells, a neighboring cell that participates in measurement. For the selected neighboring cell that participates in measurement, the location management device configures a corresponding SRS beam of the neighboring cell for the SRS resource.

Based on the foregoing description, in the embodiment shown in FIG. 6, the cell that has the spatial association with the SRS resource is configured for the terminal device, so that the terminal device may send the SRS to the cell in the spatial direction corresponding to the downlink reference signal of the cell. In this way, directional sending of the SRS may be implemented, and transmission efficiency of the SRS may be improved. In addition, the space of the SRS resource is associated with a cell instead of a downlink reference signal of the cell, so that the terminal device may be allowed to independently determine a spatial direction corresponding to a downlink reference signal of the cell to send the SRS. In this way, directional sending of the SRS may be implemented, and flexibility of selecting a sending direction of the SRS by the terminal device may be further implemented.

Optionally, the embodiment shown in FIG. 5 may be combined with the embodiment shown in FIG. 6.

For example, in the embodiment shown in FIG. 6, the terminal device may send the SRS to the neighboring cell by using the method provided in the embodiment shown in FIG. 5.

For another example, in the embodiment shown in FIG. 5, the SRS resource may be configured for the terminal device by using the method provided in the embodiment shown in FIG. 6.

The embodiments described in this specification may be independent solutions, or may be combined based on internal logic. These solutions all fall within the protection scope of this application.

It may be understood that the methods and the operations performed by the terminal device in the foregoing method embodiments may alternatively be performed by a component (for example, a chip or a circuit) that may be applied to the terminal device, and the methods and the operations performed by the network device in the foregoing method embodiments may alternatively be performed by a component (for example, a chip or a circuit) that may be applied to the network device.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in the embodiments of this application from a perspective of interaction between network elements. It may be understood that, to implement the foregoing functions, each network element, such as a transmit end device or a receive end device, includes a corresponding hardware structure and/or software module for performing each function. A person skilled in the art may be aware that, with reference to units and algorithm steps of the examples described in the embodiments disclosed in this specification, this application may be implemented by hardware or a combination of computer software and hardware. Whether a specific function is performed by hardware or hardware driven by computer software depends on particular applications and design constraints of the technical solutions. A person skilled in the art may use different methods to implement the described functions for each particular application, but it should not be considered that the implementation goes beyond the protection scope of this application.

In the embodiments of this application, a transmit end device or a receive end device may be divided into functional modules based on the foregoing method examples. For example, the transmit end device or the receive end device may be divided into functional modules corresponding to functions, or two or more functions may be integrated into one processing module. The integrated module may be implemented in a form of hardware, or may be implemented in a form of a software functional module. It should be noted that module division in the embodiments of this application is an example, and is merely logical function division. In actual implementation, another feasible division manner may be available. The following provides descriptions by using the example in which division into functional modules is performed based on functions.

FIG. 7 is a schematic block diagram of a communications apparatus 700 according to an embodiment of this application. The communications apparatus 700 includes a transceiver unit 710 and a processing unit 720. The transceiver unit 710 may communicate with the outside, and the processing unit 710 is configured to process data.

The transceiver unit 710 may also be referred to as a transceiver, a transceiver, a transceiver circuit, a transceiver apparatus, a communications interface, a communications unit, or the like. The processing unit 720 may also be referred to as a processor, a processing board, a processing module, a processing apparatus, or the like.

Optionally, a component that is in the transceiver unit 710 and that is configured to implement a receiving function may be considered as a receiving unit, and a component that is in the transceiver unit 710 and that is configured to implement a sending function may be considered as a sending unit. In other words, the transceiver unit 710 includes the receiving unit and the sending unit. The receiving unit may also be sometimes referred to as a receiver, a receiver, a receiver circuit, or the like. The sending unit may also be sometimes referred to as a transmitter, a transmitter, a transmitter circuit, or the like.

The communications apparatus 700 may be configured to perform an action performed by the terminal device in the foregoing method embodiments, the transceiver unit 710 is configured to perform a transmitting/receiving-related operation performed by the terminal device in the foregoing method embodiments, and the processing unit 720 is configured to perform a processing-related operation performed by the terminal device in the foregoing method embodiments. In this case, the communications apparatus 700 may be referred to as a terminal device.

Alternatively, the communications apparatus 700 may be configured to perform an action performed by the serving cell, the neighboring cell, or the location management device in the foregoing method embodiments, the transceiver unit 710 is configured to perform a transmitting/receiving-related operation of the serving cell, the neighboring cell, or the location management device in the foregoing method embodiments, and the processing unit 720 is configured to perform a processing-related operation of the serving cell, the neighboring cell, or the location management device in the foregoing method embodiments. In this case, the communications apparatus 700 may be referred to as a network device.

Optionally, when the communications apparatus 700 is configured to perform an action performed by the location management device in the foregoing method embodiments, the communications apparatus 700 may be referred to as a core network device.

In a design, the communications apparatus 700 is configured to perform an action performed by the terminal device in the foregoing embodiment shown in FIG. 5. The transceiver unit 710 is configured to: receive RACH configuration information of a neighboring cell from a location management device or a serving cell, where the RACH configuration information includes information about an RACH resource and a preamble; send the preamble to the neighboring cell by using the RACH resource; and receive an uplink TA of the neighboring cell that is determined by the neighboring cell based on the preamble.

Optionally, the processing unit 720 may be configured to perform a processing-related action performed by the terminal device in the foregoing embodiment shown in FIG. 5.

Optionally, the transceiver unit 710 is configured to receive the uplink TA of the neighboring cell from the location management device.

For example, the processing unit 720 is configured to obtain the uplink TA of the neighboring cell from the transceiver unit 710.

Optionally, the transceiver unit 710 is configured to receive a random access response message from the neighboring cell, where the random access response message carries the uplink TA of the neighboring cell.

For example, the processing unit 720 is configured to obtain the uplink TA of the neighboring cell by parsing the random access response message.

Optionally, the transceiver unit 710 is further configured to send a sounding reference signal SRS to the neighboring cell based on the uplink TA of the neighboring cell.

In another design, the communications apparatus 700 is configured to perform an action performed by the location management device or the serving cell in the foregoing embodiment shown in FIG. 5. The transceiver unit 710 is configured to: receive RACH configuration information from a neighboring cell, where the RACH configuration information includes information about an RACH resource and a preamble; send the RACH configuration information to a terminal device, to indicate the terminal device to send the preamble to the neighboring cell by using the RACH resource; receive, from the neighboring cell, a TA of the neighboring cell that is determined based on the preamble; and send the uplink TA of the neighboring cell to the terminal device.

Optionally, the processing unit 720 may be configured to perform a processing-related action performed by the location management device or the serving cell in the foregoing embodiment shown in FIG. 5.

For example, the communications apparatus 700 is a location management device or a serving cell.

In still another design, the communications apparatus 700 is configured to perform an action performed by the terminal device in the foregoing embodiment shown in FIG. 6. The transceiver unit 710 is configured to receive SRS resource configuration information from a network device, where the SRS resource configuration information includes information about a cell that has a spatial association with an SRS resource indicated by the SRS resource configuration information. The processing unit 720 is configured to determine, based on the SRS resource configuration information, the cell that has the spatial association with the SRS resource. The transceiver unit 710 is further configured to send, in a spatial direction corresponding to a target downlink reference signal of the cell, an SRS to the cell by using the SRS resource.

Optionally, the cell that is indicated by the SRS resource configuration information and that has the spatial association with the SRS resource is a neighboring cell.

Optionally, the network device is a location management device or a serving cell.

Optionally, the SRS resource configuration information further includes information about a reference signal type of the cell. A type of the target downlink reference signal is the reference signal type indicated by the SRS resource configuration information.

Optionally, the processing unit 720 is further configured to measure a downlink reference signal whose reference signal type of the cell is the reference signal type indicated by the SRS resource configuration information, to obtain a reference signal measurement result. The target downlink reference signal is determined based on the reference signal measurement result.

Optionally, the SRS resource configuration information further includes information indicating whether to directionally send the SRS to the cell. The transceiver unit 710 is configured to: when the SRS resource configuration information indicates information for directionally sending the SRS to the cell, send, in the spatial direction corresponding to the target downlink reference signal of the cell, the SRS to the cell by using the SRS resource.

The transceiver unit 710 is configured to: when the SRS resource configuration information indicates information for non-directionally sending the SRS to the cell, send the SRS to the cell in an omnidirectional spatial direction by using the SRS resource.

In still another design, the communications apparatus 700 is configured to perform an action performed by the location management device or the serving cell in the foregoing embodiment shown in FIG. 6. The processing unit 720 is configured to generate SRS resource configuration information, where the SRS resource configuration information includes information about a cell that has a spatial association with an SRS resource indicated by the SRS resource configuration information. The transceiver unit 710 is configured to send the SRS resource configuration information to a terminal device.

Optionally, the cell that is indicated by the SRS resource configuration information and that has the spatial association with the SRS resource is a neighboring cell.

Optionally, the communications apparatus 700 is a location management device or a serving cell.

Optionally, the SRS resource configuration information further includes information about a reference signal type of the cell.

Optionally, the SRS resource configuration information further includes information indicating whether to directionally send the SRS to the cell.

The processing unit 720 in the foregoing embodiment may be implemented by a processor or a processorrelated circuit. The transceiver unit 710 may be implemented by a transceiver or a transceiver-related circuit. The transceiver unit 710 may also be referred to as a communications unit or a communications interface.

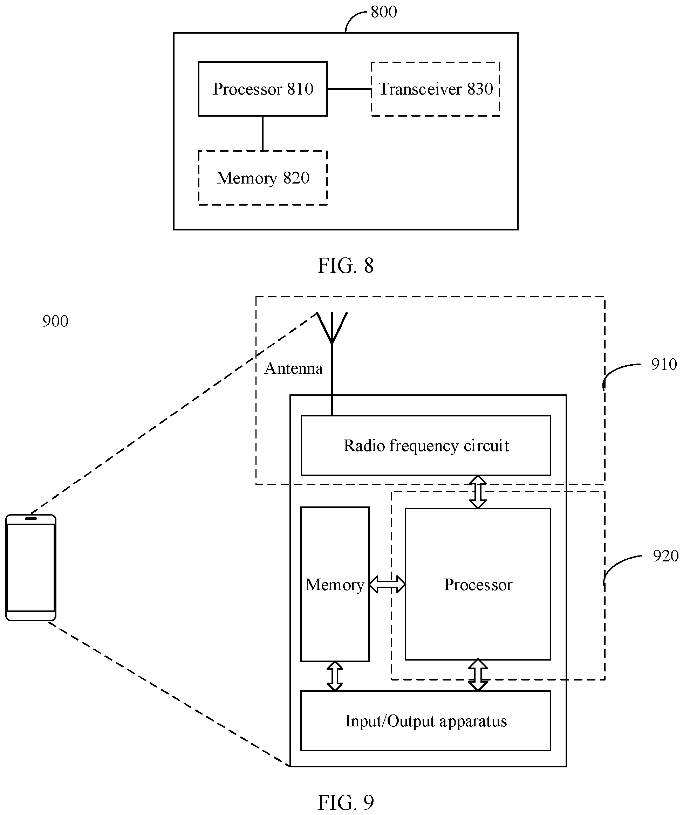

As shown in FIG. 8, an embodiment of this application further provides a communications apparatus 800. The communications apparatus 800 includes a processor 810, and the processor 810 is coupled to a memory 820. The memory 820 is configured to store a computer program or instructions, and the processor 810 is configured to execute the computer program or the instructions stored in the memory 820, so that the method in the foregoing method embodiments is performed.

Optionally, the communications apparatus 800 includes one or more processors 810.

Optionally, as shown in FIG. 8, the communications apparatus 800 may further include the memory 820.

Optionally, the memory 820 may be integrated with the processor 810, or separately disposed.

Optionally, the communications apparatus 800 includes one or more memories 820.

Optionally, as shown in FIG. 8, the communications apparatus 800 may further include a transceiver 830, and the transceiver 830 is configured to receive and/or send a signal. For example, the processor 810 is configured to control the transceiver 830 to receive and/or send a signal.

In a solution, the communications apparatus 800 is configured to perform an operation performed by the terminal device in the foregoing method embodiments.

For example, the processor 810 is configured to perform a processing-related operation performed by the terminal device in the foregoing method embodiments, and the transceiver 830 is configured to perform a transmitting/receiving-related operation performed by the terminal device in the foregoing method embodiments.

In another solution, the communications apparatus 800 is configured to perform an operation performed by the location management device in the foregoing method embodiments.

For example, the processor 810 is configured to perform a processing-related operation performed by the location management device in the foregoing method embodiments, and the transceiver 830 is configured to perform a transmitting/receiving-related operation performed by the location management device in the foregoing method embodiments.

In another solution, the communications apparatus 800 is configured to perform an operation performed by the serving cell in the foregoing method embodiments.

For example, the processor 810 is configured to perform a processing-related operation performed by the serving cell in the foregoing method embodiments, and the transceiver 830 is configured to perform a transmitting/receiving-related operation performed by the serving cell in the foregoing method embodiments.

In another solution, the communications apparatus 800 is configured to perform an operation performed by the neighboring cell in the foregoing method embodiments.

For example, the processor 810 is configured to perform a processing-related operation performed by the neighboring cell in the foregoing method embodiments, and the transceiver 830 is configured to perform a transmitting/receiving-related operation performed by the neighboring cell in the foregoing method embodiments.

An embodiment of this application further provides a communications apparatus 900. The communications apparatus 900 may be a terminal device or a chip. The communications apparatus 900 may be configured to perform an operation performed by the terminal device in the foregoing method embodiments.

When the communications apparatus 900 is a terminal device, FIG. 9 is a simplified schematic diagram of a structure of a terminal device. For ease of understanding and convenience of figure illustration, an example in which the terminal device is a mobile phone is used in FIG. 9. As shown in FIG. 9, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to send and/or receive a radio frequency signal in a form of an electromagnetic wave. The input/output apparatus, for example, a touchscreen, a display, or a keyboard, is mainly configured to receive data input by a user, and output data to the user. It should be noted that some types of terminal devices may have no input/output apparatus.

When needing to send data, the processor outputs a baseband signal to the radio frequency circuit after performing baseband processing on to-be-sent data. The radio frequency circuit sends a radio frequency signal to outside in a form of an electromagnetic wave through the antenna after performing radio frequency processing on the baseband signal. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device.

As shown in FIG. 9, the terminal device includes a transceiver unit 910 and a processing unit 920. The transceiver unit 910 may also be referred to as a transceiver, a transceiver, a transceiver apparatus, a transceiver circuit, or the like. The processing unit 920 may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The receiving unit may also be sometimes referred to as a receiver, a receiver, a receiver circuit, or the like. The sending unit may also be sometimes referred to as a transmitter, a transmitter, a transmitter circuit, or the like.

For example, in an implementation, the transceiver unit 910 is configured to perform receiving operations of step S510 and step S550 and sending operations of step S530 and step S560 in FIG. 5, and/or the transceiver unit 910 is further configured to perform another transmitting/receiving-related step performed by the terminal device. The processing unit 920 is configured to perform a processing-related step performed by the terminal device in the embodiment shown in FIG. 5.

For another example, in another implementation, the transceiver unit 910 is configured to perform a receiving operation of step S620 and a sending operation of step S630 in FIG. 6, and/or the transceiver unit 910 is further configured to perform another transmitting/receiving-related step performed by the terminal device. The processing unit 920 is configured to perform a processing-related step performed by the terminal device in the embodiment shown in FIG. 6.

It should be understood that FIG. 9 is merely an example instead of a limitation. The terminal device including the transceiver unit and the processing unit may not depend on the structure shown in FIG. 9.

When the communications apparatus 900 is a chip, the chip includes a transceiver unit and a processing unit. The transceiver unit may be an input/output circuit or a communications interface. The processing unit may be a processor, a microprocessor, or an integrated circuit integrated on the chip.

An embodiment of this application further provides a communications apparatus 1000. The communications apparatus 1000 may be a network device, a functional module having a network device function, or a chip. The communications apparatus 1000 may be configured to perform an operation performed by the serving cell or the neighboring cell in the foregoing method embodiments.

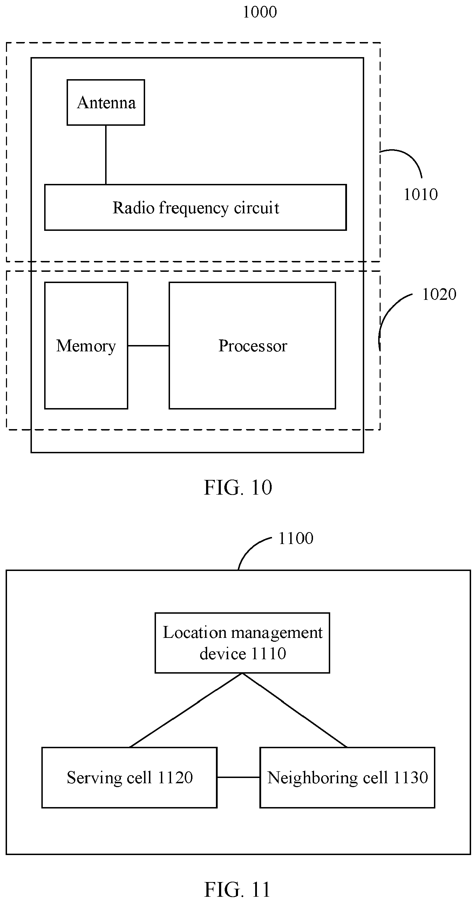

When the communications apparatus 1000 is a network device, for example, a base station, FIG. 10 is a simplified schematic diagram of a structure of a base station. The base station includes a part 1010 and a part 1020. The part 1010 is mainly configured to send and receive a radio frequency signal, and perform conversion between the radio frequency signal and a baseband signal. The part 1020 is mainly configured to perform baseband processing, control the base station, and the like. The part 1010 may usually be referred to as a transceiver unit, a transceiver, a transceiver circuit, a transceiver, or the like. The part 1020 is generally a control center of the base station, may be generally referred to as a processing unit, and is configured to control the base station to perform a processing operation performed by the network device in the foregoing method embodiments.

The transceiver unit in the part 1010 may also be referred to as a transceiver, a transceiver, or the like.

The transceiver unit includes an antenna and a radio frequency circuit, where the radio frequency circuit is mainly configured to perform radio frequency processing. Optionally, a component for implementing a receiving function in the part 1010 may be considered as a receiving unit, and a component for implementing a sending function may be considered as a sending unit. In other words, the part 1010 includes the receiving unit and the sending unit. The receiving unit may also be referred to as a receiver, a receiver, a receiver circuit, or the like, and the sending unit may be referred to as a transmitter, a transmitter, a transmitter circuit, or the like.

The part 1020 may include one or more boards, and each board may include one or more processors and one or more memories. The processor is configured to read and execute a program in the memory to implement a baseband processing function and control the base station. If there are a plurality of boards, the boards may be interconnected to enhance a processing capability. In an optional implementation, the plurality of boards may share one or more processors, or the plurality of boards may share one or more memories, or the plurality of boards may simultaneously share one or more processors.

For example, in an implementation, the transceiver unit in the part 1010 is configured to perform receiving operations of the serving cell in step S510 and step S550 and sending operations of the serving cell in step S520 and step S550 in FIG. 5, and/or the transceiver unit in the part 1010 is further configured to perform another transmitting/receiving-related step performed by the serving cell in the embodiment shown in FIG. 5. The part 1020 is configured to perform a processing-related step performed by the serving cell in the embodiment shown in FIG. 5.

For another example, in another implementation, the transceiver unit in the part 1010 is configured to perform sending operations of step S510 and step S550 and receiving operations of step S530 and step S560 in FIG. 5, and/or the transceiver unit in the part 1010 is further configured to perform another transmitting/receiving-related step performed by the neighboring cell in the embodiment shown in FIG. 5. The part 1020 is configured to perform a processing-related step performed by the neighboring cell in the embodiment shown in FIG. 5.

For example, in an implementation, the transceiver unit in the part 1010 is configured to perform a sending operation of the serving cell in step S620 in FIG. 6, and/or the transceiver unit in the part 1010 is further configured to perform another transmitting/receiving-related step performed by the serving cell in the embodiment shown in FIG. 6. The part 1020 is configured to perform a processing operation performed by the serving cell in step S610 in FIG. 6.

For another example, in another implementation, the transceiver unit in the part 1010 is configured to perform a receiving operation of step S630 in FIG. 6, and/or the transceiver unit in the part 1010 is further configured to perform another transmitting/receiving-related step performed by the neighboring cell in the embodiment shown in FIG. 6. The part 1020 is configured to perform a processing-related step performed by the neighboring cell in the embodiment shown in FIG. 6.

It should be understood that FIG. 10 is merely an example instead of a limitation. The network device including the transceiver unit and the processing unit may not depend on the structure shown in FIG. 10.

When the communications apparatus 1000 is a chip, the chip includes a transceiver unit and a processing unit. The transceiver unit may be an input/output circuit or a communications interface. The processing unit is a processor, a microprocessor, or an integrated circuit integrated on the chip.

Optionally, the communications apparatus 1000 may include one or more radio frequency units, for example, a remote radio unit (remote radio unit, RRU), and one or more baseband units (baseband unit, BBU) (which may also be referred to as a digital unit, digital unit, DU). The RRU may be referred to as a transceiver unit, and corresponds to the transceiver unit 710 in FIG. 7. The RRU is mainly configured to send and receive a radio frequency signal, and perform conversion between the radio frequency signal and a baseband signal. The BBU is mainly configured to perform baseband processing, control the base station, and so on. The RRU and the BBU may be physically disposed together, or may be physically disposed separately, that is, the communications apparatus 1000 is a distributed base station.

The BBU is a control center of the communications apparatus 1000, may also be referred to as a processing unit, may correspond to the processing unit 720 in FIG. 7, and is mainly configured to implement baseband processing functions, such as channel coding, multiplexing, modulation, and spectrum spreading. For example, the BBU (processing unit) may be configured to control the communications apparatus 1000 to perform an operation procedure related to the network device in the foregoing method embodiments.

In an example, the BBU may include one or more boards, and a plurality of boards may jointly support a radio access network (such as an LTE network) having a single access standard, or may separately support radio access networks (for example, an LTE network, a 5G network, or another network) having different access standards. The BBU further includes a memory and a processor. For example, the BBU may correspond to the part 1020 in FIG. 10. The memory is configured to store necessary instructions and data, and the processor is configured to control the communications apparatus 1000 to perform a necessary action, for example, configured to control the communications apparatus 1000 to perform an operation procedure related to the network device in the foregoing method embodiments. The memory and the processor may serve one or more boards. In other words, the memory and the processor may be separately disposed on each board. Alternatively, a plurality of boards may share a same memory and a same processor. In addition, a necessary circuit may be further disposed on each board.

In addition, the communications apparatus 1000 is not limited to the foregoing form, and may alternatively be in another form. For example, the communications apparatus 1000 includes a BBU and an adaptive radio unit (adaptive radio unit, ARU), or a BBU and an active antenna unit (active antenna unit, AAU). Alternatively, the communications apparatus 1000 may be customer premises equipment (customer premises equipment, CPE), or may be in another form. This is not limited in this application.

As shown in FIG. 11, this application further provides a communications system 1100. The communications system 1100 includes a location management device 1110, a serving cell 1120, and a neighboring cell 1130.

The serving cell 1120 in the communications system 1100 refers to a network device in the serving cell, for example, may be referred to as a serving base station. The neighboring cell 1130 in the communications system 1100 refers to a network device in the neighboring cell, for example, may be referred to as a neighboring base station.

In a design, the neighboring cell 1130 is configured to send RACH configuration information to the location management device 1110 or the serving cell 1120, where the RACH configuration information includes information about an RACH resource and a preamble. The location management device 1110 or the serving cell 1120 is configured to send the RACH configuration information to a terminal device. The neighboring cell 1130 is further configured to: receive, from the terminal device, the preamble sent by using the RACH resource; determine an uplink TA of the neighboring cell 1130 based on the preamble; and send a random access response message to the terminal device, where the random access response message carries the uplink TA of the neighboring cell 1130; or send the uplink TA of the neighboring cell 1130 to the location management device 1110 or the serving cell 1120. When the neighboring cell 1130 sends the uplink TA of the neighboring cell 1130 to the location management device 1110 or the serving cell 1120, the location management device 1110 or the serving cell 1120 is further configured to send the uplink TA of the neighboring cell 1130 to the terminal device.

In this design, the location management device 1110, the serving cell 1120, and the neighboring cell 1130 may respectively correspond to the location management device, the serving cell, and the neighboring cell 1130 in the foregoing embodiment shown in FIG. 5.

Therefore, in the communications system in this design, the terminal device obtains the uplink TA between the terminal device and the neighboring cell, so that the terminal device may adjust, based on the uplink TA of the neighboring cell, a sending occasion for sending an uplink signal to the neighboring cell, thereby avoiding, to some extent, interference caused by an SRS sent by the terminal device to the neighboring cell to another signal of the neighboring cell.

In another design, the location management device 1110 or the serving cell 1120 is configured to generate sounding reference signal SRS resource configuration information, where the SRS resource configuration information includes information about a neighboring cell 1130 that has a spatial association with an SRS resource indicated by the SRS resource configuration information. The location management device 1110 or the serving cell 1120 is configured to send the SRS resource configuration information to a terminal device. The neighboring cell 1130 is configured to receive an SRS sent, by using the SRS resource, by the terminal device in a spatial direction corresponding to a target downlink reference signal of the neighboring cell 1130.

In this design, the location management device 1110, the serving cell 1120, and the neighboring cell 1130 may respectively correspond to the location management device, the serving cell, and the neighboring cell 1130 in the foregoing embodiment shown in FIG. 6.

In the communications system in this design, the cell that has the spatial association with the SRS resource is configured for the terminal device, so that the terminal device may send the SRS to the cell in the spatial direction corresponding to the downlink reference signal of the cell. In this way, directional sending of the SRS may be implemented, and transmission efficiency of the SRS may be improved. In addition, space of the SRS resource is associated with a cell instead of a downlink reference signal of the cell, so that the terminal device is allowed to independently determine a spatial direction corresponding to a downlink reference signal of the cell to send the SRS. In this way, directional sending of the SRS may be implemented, and flexibility of selecting a sending direction of the SRS by the terminal device may be further implemented.

The communications system 1100 shown in FIG. 11 may also be referred to as a positioning system.

An embodiment of this application further provides a computer-readable storage medium. The computer-readable storage medium stores computer instructions used to perform the method performed by the terminal device, the method performed by the location management device, the method performed by the serving cell, or the method performed by the neighboring cell in the foregoing method embodiments.

In other words, when the computer program is executed by a computer, the computer is enabled to perform the method performed by the terminal device, the method performed by the location management device, the method performed by the serving cell, or the method performed by the neighboring cell in the foregoing method embodiments.

An embodiment of this application further provides a computer program product including instructions. When the instructions are executed by a computer, the computer is enabled to perform the method performed by the terminal device, the method performed by the location management device, the method performed by the serving cell, or the method performed by the neighboring cell in the foregoing method embodiments.

For explanations and beneficial effects of related content in any of the foregoing provided communications apparatuses, refer to corresponding method embodiments provided above. Details are not described herein again.

In the embodiments of this application, the terminal device or the network device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a main memory). An operating system of the operating system layer may be any one or more of computer operating systems implementing service processing by using a process (process), for example, a Linux operating system, a Unix operating system, an Android operating system, an iOS operating system, or a Windows operating system. The application layer may include applications such as a browser, an address book, word processing software, and instant communications software.

A specific structure of an execution body of the method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by a terminal device or a network device, or may be performed by a functional module that is in the terminal device or the network device and that can invoke and execute a program.

Aspects or features of this application may be implemented as a method, an apparatus or a product that uses standard programming and/or engineering technologies. The term "product" used in this specification may include a computer program that is accessible from any computer-readable device, carrier, or medium. For example, a computer-readable medium may include but is not limited to: a magnetic storage device (for example, a hard disk, a floppy disk or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel, and various other media that can store, contain, and/or carry instructions and/or data.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct Rambus random access memory (direct Rambus RAM, DR RAM).

It should be noted that when the processor is a general-purpose processor, a DSP, an ASIC, an FPGA, or another programmable logic device, discrete gate, transistor logic device, or discrete hardware component, the memory (storage module) may be integrated into the processor.

It should be further noted that the memory described in this specification is intended to include, but is not limited to, these and any other suitable types of memories.

A person of ordinary skill in the art may be aware that, in combination with the examples described in the embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solution of this application essentially, or the part contributing to the conventional technology, or all or a part of the technical solution may be implemented in the form of a computer software product. The computer software product is stored in a storage medium, and the computer software product includes several instructions. This instruction is used to cause a computer device to (which may be a personal computer, a server, or a network device) to perform all or some of the steps of the methods described in the embodiments of this application. The foregoing storage medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, comprising:

   receiving random access channel RACH configuration information of a neighboring cell from a location management device or a serving cell, wherein the RACH configuration information comprises information about an RACH resource and a preamble;
   sending the preamble to the neighboring cell by using the RACH resource; and
   receiving an uplink timing advance TA of the neighboring cell that is determined by the neighboring cell based on the preamble.

2. The method according to claim 1, wherein the receiving an uplink timing advance TA of the neighboring cell that is determined by the neighboring cell based on the preamble comprises:
   receiving the uplink TA of the neighboring cell from the location management device.

3. The method according to claim 1, wherein the receiving an uplink timing advance TA of the neighboring cell that is determined by the neighboring cell based on the preamble comprises:
   receiving a random access response message from the neighboring cell, wherein the random access response message carries the uplink TA of the neighboring cell.

4. The method according to any one of claims 1 to 3, wherein the method further comprises:
   sending a sounding reference signal SRS to the neighboring cell based on the uplink TA of the neighboring cell.

5. A signal transmission method, comprising:

   receiving random access channel RACH configuration information from a neighboring cell, wherein the RACH configuration information comprises information about an RACH resource and a preamble;
   sending the RACH configuration information to a terminal device, to indicate the terminal device to send the preamble to the neighboring cell by using the RACH resource;
   receiving, from the neighboring cell, an uplink timing advance TA of the neighboring cell that is determined based on the preamble; and
   sending the uplink TA of the neighboring cell to the terminal device.

6. The method according to claim 5, wherein the method is performed by a location management device or a serving cell.

7. A communications apparatus, comprising:

   a receiving unit, configured to receive random access channel RACH configuration information of a neighboring cell from a location management device or a serving cell, wherein the RACH configuration information comprises information about an RACH resource and a preamble; and
   a sending unit, configured to send the preamble to the neighboring cell by using the RACH resource, wherein the receiving unit is further configured to receive an uplink timing advance TA of the neighboring cell that is determined by the neighboring cell based on the preamble.

8. The communications apparatus according to claim 7, wherein the receiving unit is configured to receive the uplink TA of the neighboring cell from the location management device.

9. The communications apparatus according to claim 7, wherein the receiving unit is configured to receive a random access response message from the neighboring cell, wherein the random access response message carries the uplink TA of the neighboring cell.

10. The communications apparatus according to any one of claims 7 to 9, wherein the sending unit is further configured to send a sounding reference signal SRS to the neighboring cell based on the uplink TA of the neighboring cell.

11. A communications apparatus, comprising:

a receiving unit, configured to receive random access channel RACH configuration information from a neighboring cell, wherein the RACH configuration information comprises information about an RACH resource and a preamble; and
a sending unit, configured to send the RACH configuration information to a terminal device, to indicate the terminal device to send the preamble to the neighboring cell by using the RACH resource, wherein
the receiving unit is further configured to receive, from the neighboring cell, an uplink timing advance TA of the neighboring cell that is determined based on the preamble; and
the sending unit is further configured to send the uplink TA of the neighboring cell to the terminal device.

12. The communications apparatus according to claim 11, wherein the communications apparatus is a location management device or a serving cell.

13. A communications system, comprising a location management device, a serving cell, and a neighboring cell, wherein

the neighboring cell is configured to send random access channel RACH configuration information to the location management device or the serving cell, wherein the RACH configuration information comprises information about an RACH resource and a preamble;
the location management device or the serving cell is configured to send the RACH configuration information to a terminal device; and
the neighboring cell is further configured to:

receive, from the terminal device, the preamble sent by using the RACH resource;
determine an uplink timing advance TA of the neighboring cell based on the preamble; and
send a random access response message to the terminal device, wherein the random access response message carries the uplink TA of the neighboring cell; or send the uplink TA of the neighboring cell to the location management device or the serving cell, wherein
when the neighboring cell sends the uplink TA of the neighboring cell to the location management device or the serving cell, the location management device or the serving cell is further configured to send the uplink TA of the neighboring cell to the terminal device.

14. A communications apparatus, comprising:
a processor, wherein the processor is coupled to a memory, the memory is configured to store a computer program or instructions, and the processor is configured to execute the computer program or the instructions stored in the memory, so that the method according to any one of claims 1 to 4 or the method according to claim 5 or 6 is performed.

15. A computer-readable storage medium, wherein the computer-readable storage medium stores a computer program or instructions used to implement the method according to any one of claims 1 to 4 or the method according to claim 5 or 6.

FIG. 1

FIG. 2

FIG. 3

FIG. 4

FIG. 5

| Location management device or serving cell | Terminal device | Neighboring cell |
|---|---|---|

Determine SRS resource configuration information, including information about a neighboring cell that has a spatial association with an SRS resource indicated by the SRS resource configuration information — S610

S620 — SRS resource configuration information →

Send, in a spatial direction corresponding to a target downlink reference signal of the neighboring cell that has the spatial association with the SRS resource, an SRS by using the SRS resource

S630 —

**FIG. 6**

700

Transceiver unit 710

Processing unit 720

**FIG. 7**

800

Processor 810 — Transceiver 830

Memory 820

FIG. 8

900

910

Antenna

Radio frequency circuit

920

Memory ⟷ Processor

Input/Output apparatus

FIG. 9

1000

Antenna

Radio frequency circuit

1010

Memory

Processor

1020

FIG. 10

1100

Location management
device 1110

Serving cell 1120

Neighboring cell 1130

FIG. 11

## INTERNATIONAL SEARCH REPORT

| International application No. |
| --- |
| **PCT/CN2020/099763** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 定时提前, 时间提前, 上行, 邻, 小区, 基站, 前导码, 随机接入, 定位管理, 随机接入响应, 探测参考信号, timing advance, TA, uplink, neighbor, PRACH, RACH, preamble, positioning, RAR, SRS

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2011090301 A2 (SAMSUNG ELECTRONICS CO., LTD.) 28 July 2011 (2011-07-28) description, paragraphs [16]-[18], [57]-[68], [81]-[91], [102]-[106], figures 4, 6, 9, 12-13 | 1-15 |
| X | ZTE. "Discussion on NR positioning signals" *3GPP TSG RAN WG1 Meeting #96bis R1-1903901,* 03 April 2019 (2019-04-03), section 2 | 1-15 |
| A | CN 105264978 A (LG ELECTRONICS INC.) 20 January 2016 (2016-01-20) entire document | 1-15 |
| A | CN 107925605 A (INTEL IP CORP.) 17 April 2018 (2018-04-17) entire document | 1-15 |
| A | WO 2018084773 A1 (TELEFONAKTIEBOLAGET LM ERICSSON (PUBL)) 11 May 2018 (2018-05-11) entire document | 1-15 |
| A | US 2019141754 A1 (QUALCOMM INCORPORATED) 09 May 2019 (2019-05-09) entire document | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 August 2020** | **03 September 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/099763**

| Patent document cited in search report | | | Publication date (day/month/year) | Patent family member(s) | | | Publication date (day/month/year) |
|---|---|---|---|---|---|---|---|
| WO | 2011090301 | A2 | 28 July 2011 | EP | 2526717 | B1 | 04 March 2020 |
| | | | | US | 2012294287 | A1 | 22 November 2012 |
| | | | | US | 10306525 | B2 | 28 May 2019 |
| | | | | US | 10313939 | B2 | 04 June 2019 |
| | | | | EP | 2526717 | A4 | 30 November 2016 |
| | | | | US | 10313940 | B2 | 04 June 2019 |
| | | | | US | 2015172973 | A1 | 18 June 2015 |
| | | | | US | 2016037410 | A1 | 04 February 2016 |
| | | | | EP | 2526717 | A2 | 28 November 2012 |
| | | | | US | 2016037409 | A1 | 04 February 2016 |
| | | | | KR | 20110085441 | A | 27 July 2011 |
| | | | | KR | 101710607 | B1 | 27 February 2017 |
| | | | | WO | 2011090301 | A3 | 01 December 2011 |
| CN | 105264978 | A | 20 January 2016 | EP | 3007498 | A1 | 13 April 2016 |
| | | | | WO | 2014196748 | A1 | 11 December 2014 |
| | | | | US | 2016100374 | A1 | 07 April 2016 |
| | | | | JP | 2016523479 | A | 08 August 2016 |
| | | | | EP | 3007498 | B1 | 04 July 2018 |
| | | | | US | 9894627 | B2 | 13 February 2018 |
| | | | | EP | 3007498 | A4 | 15 February 2017 |
| | | | | CN | 105264978 | B | 03 September 2019 |
| | | | | JP | 6392332 | B2 | 19 September 2018 |
| | | | | KR | 20160015208 | A | 12 February 2016 |
| CN | 107925605 | A | 17 April 2018 | US | 2018235013 | A1 | 16 August 2018 |
| | | | | US | 10477591 | B2 | 12 November 2019 |
| | | | | WO | 2017044155 | A1 | 16 March 2017 |
| | | | | TW | 201720211 | A | 01 June 2017 |
| | | | | HK | 1252787 | A1 | 31 May 2019 |
| WO | 2018084773 | A1 | 11 May 2018 | RU | 2708230 | C1 | 05 December 2019 |
| | | | | US | 2019261302 | A1 | 22 August 2019 |
| | | | | US | 10616856 | B2 | 07 April 2020 |
| | | | | CN | 110100484 | A | 06 August 2019 |
| | | | | EP | 3536064 | A1 | 11 September 2019 |
| | | | | IN | 201947021110 | A | 21 June 2019 |
| US | 2019141754 | A1 | 09 May 2019 | WO | 2019089965 | A1 | 09 May 2019 |
| | | | | CN | 111279785 | A | 12 June 2020 |
| | | | | IN | 202047013228 | A | 05 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910721719